# EUROPÄISCHE PATENTSCHRIFT

(11) **EP 2 291 622 B1**
(45) Veröffentlichungstag und Bekanntmachung des Hinweises auf die Patenterteilung: **11.07.2018**
(21) Anmeldenummer: 09768873.3
(22) Anmeldetag: 14.05.2009
(51) Int. Cl.: G01G 21/24

(54) **WÄGESYSTEM MIT ÜBERSETZUNGSHEBEL**
WEIGHING SYSTEM HAVING A CONVERSION LEVER
SYSTÈME DE PESÉE À LEVIER DE TRANSMISSION

(30) Priorität: 24.06.2008 DE 202008008459 U
(43) Veröffentlichungstag der Anmeldung: 09.03.2011
(73) Patentinhaber: Sartorius Lab Instruments GmbH & Co. KG, 37079 Göttingen (DE)
(72) Erfinder: HEINE, August, 37434 Bodensee (DE); LAUBSTEIN, Michael, 37077 Göttingen (DE)
(74) Vertreter: Schneider, Peter Christian
(86) Internationale Anmeldenummer: PCT/EP2009/003422
(87) Internationale Veröffentlichungsnummer: WO 2009/156024

(56) Entgegenhaltungen:
- WO-A-2004/111583
- DE-B3-102005 005 368
- DE-U1- 29 509 829
- DE-U1-202004 011 793

## Beschreibung

Die Erfindung bezieht sich auf ein
Verfahren zur Herstellung eines Wägesystems für eine oberschalige Waage nach dem Prinzip der elektromagnetischen Kraftkompensation mit
- einem gehäusefesten Bereich,
- einem durch zwei Lenker beweglich mit dem gehäusefesten Bereich verbundenen Lastaufnehmer,
- einem Übersetzungshebel,
- einer Materialdünnstelle oder einem Materialdünnstellenpaar zur Lagerung des Übersetzungshebel und
- einem Koppelelement, das die Kraft vom Lastaufnehmer zum kurzen Hebelarm des Übersetzungshebels überträgt,
wobei das Verfahren die folgenden Schritte umfasst:
- Bereitstellen eines Materialblocks und
- einstückiges Herausarbeiten des Lastaufnehmers, des gehäusefesten Bereichs, der Lenker, des Koppelelementes (6), des Übersetzungshebels und der Materialdünnstelle bzw. des Materialdünnstellenpaares aus dem Materialblock,
wobei der Übersetzungshebel während des Schrittes des einstückigen Herausarbeitens über mindestens eine weitere Fixierdünnstelle mit dem gehäusefesten Bereich verbunden ist und diese weitere Fixierdünnstelle(n) zum Ende des Schrittes des einstückigen Herausarbeitens aufgetrennt wird/werden.

Wägesysteme der auf diese Weise herstellbaren Art sind z. B. aus dem deutschen Gebrauchsmuster 20 2004 011 793 bekannt. Die Fixierdünnstelle(n) dient/dienen dabei der Stabilisierung des Wägesystems während der Fertigung und bei der Montage z. B. der Spule für die elektromagnetische Kraftkompensation. In dem zitieren Gebrauchsmuster ist nur eine einfache Dünnstelle zur Lagerung des Übersetzungshebels gezeigt. Es ist jedoch auch bekannt - z. B. aus der DE 44 27 087 C2 - die Materialdünnstelle in ein Materialdünnstellenpaar aufzuteilen, wobei die beiden Dünnstellen des Materialdünnstellenpaares eine gemeinsame Drehachse bilden und funktionell daher wie eine einzelne Materialdünnstelle wirken. Ein besonders kompaktes, monolithisches Wägesystem dieser Art ist aus der WO 2004/111 583 A1 bekannt, die jedoch nicht das oben erläuterte Prinzip der (temporären) Fixierdünnstelle offenbart.

Auch die DE 295 09 829 U1 offenbart ein Wägesystem, dessen Übersetzungshebel auf einem Materialdünnstellenpaar gelagert ist. Das Prinzip der (temporären) Fixierdünnstelle bei der Herstellung wird in dieser Druckschrift im Zusammenhang mit den Lenkern, nicht aber im Zusammenhang mit dem Übersetzungshebel offenbart.

Aus der DE 10 2005 005 368 B3 ist ein Wägesystem mit einer besonderen Art von Gelenken, nämlich mit sog. Kreuzgelenken offenbart. Das Prinzip der (temporären) Fixierdünnstelle bei der Herstellung findet in dieser Druckschrift jedoch keine Offenbarung.

Wägesysteme dieser Art lassen sich sehr reproduzierbar fertigen und erfordern nur einen geringen Montageaufwand. Nachteilig ist nur, dass für jeden herzustellenden Wägebereich ein gesondertes Wägesystem entworfen und hergestellt werden muss.

Aufgabe der Erfindung ist es, das oben angegebene Herstellungsverfahren für Wägesysteme vielseitiger einsetzbar zu machen, insbesondere für verschiedene Wägebereiche, ohne den Fertigungsaufwand wesentlich zu erhöhen.

Erfindungsgemäß wird dies dadurch erreicht, dass mindestens zwei Materialdünstellen oder Materialdünnstellenpaare in Längsrichtung des Übersetzungshebels beabstandet nebeneinander angeordnet sind, sodass sie grundsätzlich zur Lagerung des Übersetzungshebels einsetzbar sind, wobei jedoch alle bis auf eine Materialdünnstelle bzw. ein Materialdünnstellenpaar als Fixierdünnstelle(n) aufgetrennt werden, sodass durch die Wahl der nicht aufgetrennten Materialdünnstelle bzw. des nicht aufgetrennten Materialdünnstellenpaares genau eines von mindestens zwei wählbaren Übersetzungsverhältnissen des Übersetzungshebels realisiert wird.

Von den sowieso notwendigen Fixierdünnstellen wird also mindestens eine so angeordnet und dimensioniert, dass sie auch als Materialdünnstelle zur Lagerung des Übersetzungshebels einsetzbar ist. Dadurch weist das Wägesystem mindestens zwei mögliche Drehpunkte für den Übersetzungshebel auf. Und erst zum Ende der Fertigungs- und Montagevorgänge wird entschieden, welche Materialdünnstelle(n) aufgetrennt wird/werden und welche Materialdünnstelle als Lager für den Übersetzungshebel stehen bleibt. - Bei der Aufteilung der Materialdünnstellen in Materialdünnstellenpaare gilt dies in entsprechender Weise.

Dadurch lassen sich aus einem Grundaufbau zwei verschiedene Wägesysteme mit zwei verschiedenen Übersetzungsverhältnissen des Übersetzungshebels und damit zwei verschiedenen Höchstlasten herstellen.

Das Erzeugen von verschiedenen Übersetzungsverhältnissen durch verschieden am Übersetzungshebel angeordneten Schneiden oder durch verschieden angeschraubte Federgelenke ist im Prinzip bereits aus der DE 32 15 603 A1 bzw. der DE 198 59 991 A1 bekannt. Eine Übertragung dieses Grundprinzips auf monolithische Wägesysteme und die Kombination mit den für die Fertigung sowieso benötigten Fixierdünnstellen ist dort allerdings nicht offenbart oder nahegelegt.

Vorteilhafte Ausgestaltungen ergeben sich aus den Unteransprüchen.

Die Erfindung wird im Folgenden anhand der schematischen Zeichnungen beschrieben. Dabei zeigt:
- Fig. 1: eine perspektivische Ansicht der für die Erfindung wesentlichen Teile des Wägesystems und
- Fig. 2: eine Seitenansicht der für die Erfindung wesentlichen Teile des Wägesystems.

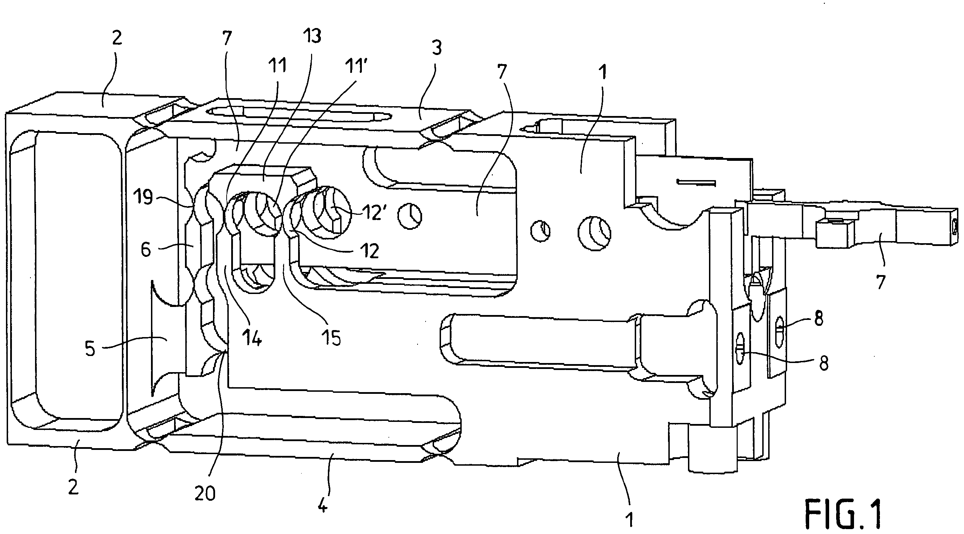

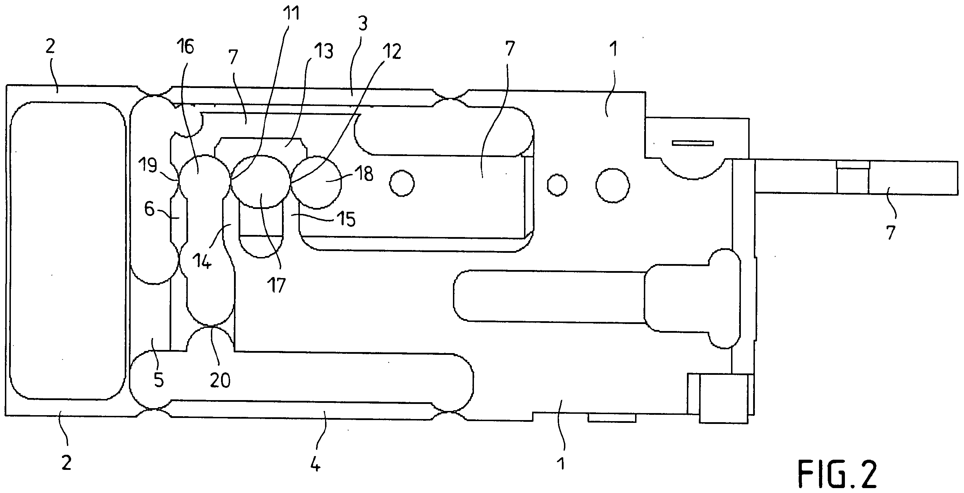

In der perspektivischen Ansicht von Figur 1 und der Seitenansicht von Figur 2 erkennt man einen Lastaufnehmer 2, der über einen oberen Lenker 3 und einen unteren Lenker 4 in senkrechter Richtung beweglich mit einem gehäusefesten Bereich 1 verbunden ist. Der gehäusefeste Bereich 1 ist am Gehäuse der Waage befestigt (nicht gezeichnet), der Lastaufnehmer 2 trägt die Waagschale (ebenfalls nicht gezeichnet). Die Gewichtskraft des Wägegutes wird vom Lastaufnehmer 2 über einen Vorsprung 5 und ein Koppelelement 6 auf den kurzen Hebelarm des Übersetzungshebels 7 übertragen. Am Ende des langen Hebelarms des Übersetzungshebels ist die nicht eingezeichnete Spule befestigt. Die Spule taucht in den Luftspalt eines ebenfalls nicht gezeichneten Magneten ein, der am gehäusefesten Bereich festgeschraubt ist. Der gehäusefeste Bereich 1 weist dazu Bohrungen 8 auf. Ein Strom durch die Spule erzeugt dabei in bekannter Weise die Gegenkraft zur Kraftkompensation. Die notwendige Elektronik der Waage ist allgemein bekannt und für die Erfindung nicht relevant, auf eine Darstellung und Erläuterung wird daher verzichtet.

Der Übersetzungshebel 7 ist nun über zwei Materialdünnstellenpaare 11/11' und 12/12' mit dem gehäusefesten Bereich 1 verbunden. Dazu weist der Übersetzungshebel 7 beidseitig ein vorkragendes Trägerelement 13 auf, das sich nach unten zu den Materialdünnstellen 11 und 12 bzw. 11' und 12' hin verjüngt. Über die beiden Ständer 14 und 15 stützen sich die Materialdünnstellen 11 und 12 dann auf dem gehäusefesten Bereich 1 ab; in entsprechender Weise stützen sich die Materialdünnstellen 11' und 12' über Ständer, die in Figur 1 und 2 nicht erkennbar sind, auf dem gehäusefesten Bereich ab. Die beiden Materialdünnstellenpaare 11/11' und 12/12' befinden sich in gleicher Höhe und sind in Längsrichtung des Übersetzungshebels 7 beabstandet. Beide Materialdünnstellenpaare sind von ihrer Lage und ihrer Dimensionierung so ausgelegt, dass sie als Lagerelemente für den Übersetzungshebel einsetzbar sind. Beide Materialdünnstellenpaare wirken während der Fertigungs- und Montagvorgänge als Fixierung des Übersetzungshebels; welches Materialdünnstellenpaar schließlich als Lagerung für den Übersetzungshebel benutzt wird, braucht erst am Ende der Fertigungs- und Montagevorgänge entschieden zu werden. Soll das Materialdünnstellenpaar 11/11' als Lagerung für den Übersetzungshebel 7 benutzt werden, wird das Materialdünnstellenpaar 12/12' wie eine Fixierdünnstelle aufgetrennt. Der kurze Hebelarm des Übersetzungshebels ist dann relativ kurz und der Übersetzungshebel hat damit ein höheres Übersetzungsverhältnis. Dadurch ergibt sich ein Wägesystem mit großer Höchstlast. - Wird stattdessen das Materialdünnstellenpaar 12/12' als Lagerung für den Übersetzungshebel 7 benutzt und das Materialdünnstellenpaar 11/11' aufgetrennt, so ist der kurze Hebelarm des Übersetzungshebels länger und das Übersetzungsverhältnis entsprechend geringer. Bei gleicher Dimensionierung von Spule und Magnet der elektromagnetischen Kraftkompensation ergibt sich dann ein Wägesystem mit geringerer Höchstlast. - Dadurch können mit der gleichen Geometrie bei der Herstellung zwei verschiedene Wägebereiche realisiert werden.

Der ganze in den Figuren 1 und 2 dargestellte Teil des Wägesystems ist z. B. durch Fräsen aus einem einzigen Materialblock herausgearbeitet. Die beiden Materialdünnstellenpaare 11/11' und 12/12' werden dabei vorteilhafterweise durch drei horizontale Bohrungen 16, 17 und 18 erzeugt, wie es am besten in Figur 2 erkennbar ist und dort bezeichnet ist. Die Bohrungen liegen auf einer horizontalen Linie nebeneinander, ihr Durchmesser und Abstand ist so gewählt, dass sich die gewünschte Materialdicke für die Materialdünnstellenpaare ergibt. Die Materialdicke für die Materialdünnstellenpaare kann dabei gleich gewählt sein oder verschieden, z. B. kann die Materialdicke für die Dünnstellenpaare 11/11' größer gewählt sein, da sie zu einem Wägesystem mit größerer Höchstlast gehören. - Unter dem Begriff Bohrung sollen dabei nicht nur solche mit mathematisch exakter Kreisform verstanden werden, sondern auch solche mit fertigungsbedingten kleinen Abweichungen von der Kreisform. In Figur 2 ist z. B. für die Bohrung 17 eine leichte Tendenz zum Langloch angedeutet.

Der Durchmesser der Bohrung 16 ist vorteilhafterweise so gewählt, dass diese Bohrung nicht nur das Materialdünnstellenpaar 11/11' nach links begrenzt, sondern auch die Materialdünnstelle 19 des Koppelementes 6 nach rechts begrenzt, wie es am besten in Figur 2 erkennbar ist. Dadurch können durch vier Bohrungen alle drei Materialdünnstellen bzw. Materialdünnstellenpaare 19, 11/11' und 12/12' hergestellt werden.

In der gezeichneten Ausführungsform haben die Bohrungen 16, 17 und 18 den gleichen Durchmesser. Dadurch ergeben sich für alle Materialdünnstellenpaare gleiche und symmetrische Außenkonturen. Es ist jedoch auch möglich, durch Bohrungen verschiedenen Durchmessers und/oder durch beliebig gestaltete Ausnehmungen Materialdünnstellen bzw. Materialdünnstellenpaare mit beliebig geformten Außenkonturen zu erzeugen.

In Figur 1 und 2 erkennt man weiterhin eine zusätzliche Fixierdünnstelle 20 zwischen dem Vorspruch 5 am Lastaufnehmer und dem gehäusefesten Bereich 1. Diese Fixierdünnstelle fixiert während der Fertigung und Montag zum einen die Lage des Lastaufnehmers 2 und zum anderen über das Koppelelement 6 auch die Lage des Übersetzungshebels 7. Weitere Fixierdünnstellen können vorgesehen sein, um eine zuverlässige Fixierung sowohl in x- als auch in y-Richtung zu erzielen. Die Fixierung durch die benachbarten Materialdünnstellenpaare 11/11' und 12/12' ist dabei natürlich besonders effektiv, da die zu schützende Materialdünnstelle und die Fixierdünnstelle nahe beieinander liegen.

In den Figuren 1 und 2 ist ein Wägesystem mit zwei nebeneinander angeordneten Materialdünnstellenpaaren gezeigt. Die Erweiterung auf drei oder noch mehr Materialdünnstellenpaare, um drei oder mehr Alternativen für das Übersetzungsverhältnis zu erhalten, kann jeder Fachmann leicht selbst angeben und muss daher nicht erläutert werden.

Selbstverständlich kann das Wägesystem in bekannter Weise auch weitere Übersetzungshebel aufweisen, die durch weitere Koppelelemente mit dem ersten Übersetzungshebel verbunden sind, um eine größere Kraftuntersetzung zu erzielen.

### Bezugszeichenliste

- 1: gehäusefester Bereich
- 2: Lastaufnehmer
- 3: oberer Lenker
- 4: unterer Lenker
- 5: Vorsprung
- 6: Koppelelement
- 7: Übersetzungshebel
- 8: Bohrungen
- 11, 11': Materialdünnstellen
- 12, 12': Materialdünnstellen
- 13: vorkragendes Trägerelement
- 14: Ständer
- 15: Ständer
- 16: Bohrung
- 17: Bohrung
- 18: Bohrung
- 19: Materialdünnstelle des Koppelelementes
- 20: Fixierdünnstelle

## Patentansprüche

1. Verfahren zur Herstellung eines Wägesystems für eine oberschalige Waage nach dem Prinzip der elektromagnetischen Kraftkompensation mit
- einem gehäusefesten Bereich (1),
- einem durch zwei Lenker (3, 4) beweglich mit dem gehäusefesten Bereich (1) verbundenen Lastaufnehmer (2),
- einem Übersetzungshebel (7),
- einer Materialdünnstelle (11) oder einem Materialdünnstellenpaar (11/11') zur Lagerung des Übersetzungshebels (7) und
- einem Koppelelement (6), das die Kraft vom Lastaufnehmer (2) zum kurzen Hebelarm des Übersetzungshebels (7) überträgt,
wobei das Verfahren die folgenden Schritte umfasst:
- Bereitstellen eines Materialblocks und
- einstückiges Herausarbeiten des Lastaufnehmers (2), des gehäusefesten Bereichs (1), der Lenker (3, 4), des Koppelelementes (6), des Übersetzungshebels (7) und der Materialdünnstelle (11) bzw. des Materialdünnstellenpaares (11/11') aus dem Materialblock,
wobei der Übersetzungshebel (7) während des Schrittes des einstückigen Herausarbeitens über mindestens eine weitere Fixierdünnstelle (20) mit dem gehäusefesten Bereich verbunden ist und diese weitere Fixierdünnstelle(n) (20) zum Ende des Schrittes des einstückigen Herausarbeitens aufgetrennt wird/werden,
**dadurch gekennzeichnet,**
**dass** mindestens zwei Materialdünnstellen (11, 12) oder Materialdünnstellenpaare (11/11', 12/12') in Längsrichtung des Übersetzungshebels (7) beabstandet nebeneinander angeordnet sind, sodass sie grundsätzlich zur Lagerung des Übersetzungshebels (7) einsetzbar sind,
wobei jedoch alle bis auf eine Materialdünnstelle (11; 12) bzw. ein Materialdünnstellenpaar (11/11'; 12/12') als Fixierdünnstelle(n) aufgetrennt werden, sodass durch die Wahl der nicht aufgetrennten Materialdünnstelle (11; 12) bzw. des nicht aufgetrennten Materialdünnstellenpaares (11/11'; 12/12') genau eines von mindestens zwei wählbaren Übersetzungsverhältnissen des Übersetzungshebels (7) realisiert wird.

2. Verfahren nach Anspruch 1, **dadurch gekennzeichnet, dass** die mindestens zwei Materialdünnstellen oder Materialdünnstellenpaare (11, 12; 11/11', 12/12') durch mindestens drei horizontale, auf einer waagerechten Linie nebeneinander liegende Bohrungen (16, 17, 18) erzeugt werden.

3. Verfahren nach Anspruch 2, **dadurch gekennzeichnet, dass** eine der Bohrungen (16) gleichzeitig eine Materialdünnstelle (19) des Koppelelementes (6) begrenzt.

4. Verfahren nach Anspruch 1, **dadurch gekennzeichnet, dass** die mindestens zwei Materialdünnstellen oder Materialdünnstellenpaare (11, 12; 11/11', 12/12') gleiche Materialdicken aufweisen.

5. Verfahren nach Anspruch 1, **dadurch gekennzeichnet, dass** die mindestens zwei Materialdünnstellen oder Materialdünnstellenpaare (11, 12; 11/11', 12/12') verschiedene Materialdicken aufweisen.

6. Verfahren nach Anspruch 2, **dadurch gekennzeichnet, dass** die Bohrungen (16, 17, 18) gleichen Durchmesser aufweisen.

7. Verfahren nach Anspruch 2, **dadurch gekennzeichnet, dass** die Bohrungen (16, 17, 18) verschiedene Durchmesser aufweisen.

## Claims

1. Method of producing a weighing system for an upper-pan weighing machine according to the principle of electromagnetic force compensation, comprising
- a region (1) fixed relative to a housing,
- a load receiver (2) movably connected by two guides (3, 4) with the region (1) fixed relative to a housing,
- a translation lever (7),
- a material thin location (11) or a material thin location pair (11/11') for mounting the translation lever (7) and
- a coupling element (6) which transfers the force from the load receiver (2) to the short lever arm of the translation lever (7),
wherein the method comprises the following steps:
- providing a block material and
- integral machining out the load receiver (2), the region (1) fixed relative to a housing, the guides (3, 4), the coupling element (6), the translation lever (7) and the material thin location (11) or material thin location pair (11/11') from the material block,
wherein the translation lever (7) during the step of integral machining out is connected by way of at least one further, fixing thin location (20) with the region fixed relative to a housing and this further, fixing thin location (20) or further fixing thin locations (20) is or are separated at the end of the step of integral machining out,
**characterised in that**
at least two material thin locations (11, 12) or material thin location pairs (11/11'; 12/12') are arranged adjacent to one another in longitudinal direction of the translation lever (7) at a spacing so that in principle they are usable for mounting the translation lever (7), wherein, however, all apart from one material thin location (11; 12) or one material thin location pair (11/11'; 12/12') as fixing thin location or locations are separated so that through selection of the material thin location (11; 12) which is not separated or the material thin location pair (11/11'; 12/12') which is not separated exactly one of at least two selectable translation ratios of the translation lever (7) is realised.

2. Method according to claim 1, **characterised in that** the at least two material thin locations or material thin location pairs (11, 12; 11/11', 12/12') are produced by at least three horizontal bores (16, 17, 18) lying adjacent to one another on a horizontal line.

3. Method according to claim 2, **characterised in that** one of the bores (16) at the same time bounds a material thin location (19) of the coupling element (6).

4. Method according to claim 1, **characterised in that** the at least two material thin locations or material thin location pairs (11, 12; 11/11', 12/12') have the same material thickness.

5. Method according to claim 1, **characterised in that** the at least two material thin locations or material thin location pairs (11, 12; 11/11', 12/12') have different material thicknesses.

6. Method according to claim 2, **characterised in that** the bores (16, 17, 18) have the same diameter.

7. Method according to claim 2, **characterised in that** the bores (16, 17, 18) have different diameters.

## Revendications

1. Procédé de fabrication d'un système de pesage pour une balance à plateau supérieur suivant le principe de compensation de force électromagnétique, avec
- une zone solidaire du boîtier (1),
- un support de charge (2) relié de manière mobile à la zone solidaire du boîtier (1) par deux bras (3, 4),
- un levier de transmission (7),
- une zone à amincissement de matière (11) ou une paire de zones à amincissement de matière (11/11') pour le support du levier de transmission (7) et
- un élément d'accouplement (6) transmettant la force du support de charge (2) au bras court du levier de transmission (7),
dans lequel le procédé comprend les étapes suivantes :
- la préparation d'un bloc de matière et
- le façonnement en une seule pièce du support de charge (2), de la zone solidaire du boîtier (1), des bras (3, 4), de l'élément d'accouplement (6), du levier de transmission (7) et de la zone à amincissement de matière (11) ou de la paire de zones à amincissement de matière (11/11') dans le bloc de matière,
dans lequel le levier de transmission (7) est relié à la zone solidaire du boîtier par au moins une autre zone de fixation à amincissement de matière (20) pendant l'étape de façonnement en une seule pièce et ladite/lesdites autre(s) zone(s) de fixation à amincissement de matière (20) est/sont séparé(e)s à la fin de l'étape de façonnement en une seule pièce,
**caractérisé**
**en ce qu'**au moins deux zones à amincissement de matière (11, 12) ou paires de zones à amincissement de matière (11/11', 12/12') sont juxtaposées en étant espacées l'une de l'autre dans le sens de la longueur du levier de transmission (7), de manière à être généralement utilisables pour le support du levier de transmission (7),
dans lequel toutes les zones à amincissement de matière à l'exception d'une zone à amincissement de matière (11 ; 12) ou d'une paire de zones à amincissement de matière (11/11' ; 12/12') sont toutefois séparées comme zone(s) de fixation à amincissement, si bien que la sélection de la zone à amincissement de matière (11 ; 12) non séparée ou de la paire de zones à amincissement de matière (11/11' ; 12/12') non séparée réalise précisément un rapport entre au moins deux rapports de démultiplication sélectionnables du levier de transmission (7).

2. Procédé selon la revendication 1, **caractérisé en ce que** lesdites au moins deux zones à amincissement de matière ou la paire de zones à amincissement de matière (11, 12 ; 11/11', 12/12') sont produites par au moins trois alésages (16, 17, 18) horizontaux juxtaposés sur une ligne horizontale.

3. Procédé selon la revendication 2, **caractérisé en ce qu'**un des alésages (16) limite simultanément une zone à amincissement de matière (19) de l'élément d'accouplement (6).

4. Procédé selon la revendication 1, **caractérisé en ce que** lesdites au moins deux zones à amincissement de matière ou la paire de zones à amincissement de matière (11, 12 ; 11/11', 12/12') ont la même épaisseur de matière.

5. Procédé selon la revendication 1, **caractérisé en ce que** lesdites au moins deux zones à amincissement de matière ou la paire de zones à amincissement de matière (11, 12 ; 11/11', 12/12') ont des épaisseurs de matière différentes.

6. Procédé selon la revendication 2, **caractérisé en ce que** les alésages (16, 17, 18) ont le même diamètre.

7. Procédé selon la revendication 2, **caractérisé en ce que** les alésages (16, 17, 18) ont des diamètres différents.
